# EUROPEAN PATENT SPECIFICATION

(11) **EP 1 466 293 B1**
(45) Date of publication and mention of the grant of the patent: **17.03.2010**
(21) Application number: 02795915.4
(22) Date of filing: 17.12.2002
(51) Int. Cl.: G06K 9/00, G06K 9/36, G06K 9/20, G06K 19/00, G01N 1/00

(54) **SYSTEM AND METHOD FOR DETECTING HAZARDS IN A MAIL PIECE**
SYSTEM UND VERFAHREN ZUM ERKENNEN VON GEFÄHRLICHEM POSTGUT
SYSTÈME ET PROCÉDÉ POUR IDENTIFIER DES PIÈCES DE COURRIER CONTAMINÉES

(30) Priority: 19.12.2001 US 683381; 19.12.2001 US 683380; 19.12.2001 US 683379
(43) Date of publication of application: 13.10.2004
(73) Proprietor: PITNEY BOWES INC., Stamford, CT 06926 (US)
(72) Inventor: CORDERY, Robert, A., Danbury, CT 06811 (US); RUSSO, Karin, A., Redding, CT 06896 (US); SANSONE, Ronald, P., Weston, CT 06883 (US)
(74) Representative: HOFFMANN EITLE
(86) International application number: PCT/US2002/040432
(87) International publication number: WO 2003/054778

(56) References cited:
- EP-A- 1 063 602
- DE-A1- 10 153 420
- US-A- 5 440 136
- US-A- 2003 034 874
- US-A1- 2002 124 664
- US-A1- 2002 141 613
- US-A1- 2002 141 613

## Description

The embodiments described herein relate generally to detecting hazards in mail and more specifically to systems and methods for detecting and containing contaminated mail in incoming mail receptacles, for example known from US-A-2002/141613.

### CROSS REFERENCE TO RELATED CASES

This application is related to commonly assigned, copending U.S. Patent Application Serial No.: 09/683,379, filed on December 19,2001, entitled "METHOD AND SYSTEM FOR DETECTING BIOLOGICAL AND CHEMICAL HAZARDS IN MAIL," in the name of Robert A. Cordery, Ronald P. Sansone and Karin A. Russo.

This application is related to commonly assigned, copending U.S. Patent Application Serial No.: 09/683,380, filed on December 19, 2001, entitled "METHOD AND SYSTEM FOR DETECTING BIOLOGICAL AND CHEMICAL HAZARDS IN NETWORKED INCOMING MAILBOXES," in the name of Ronald P. Sansone, Robert A. Cordery and Karin A. Russo.

### BACKGROUND

The United States Postal Service (USPS) provides a service of mail piece reception, sorting and delivery to national addresses and international postal streams. The USPS processes approximately 200 billion domestic letters per year. The USPS also processes parcels. Similarly, other courier services also exist that process letters and parcels.

Anthrax spores have been detected on mail pieces, mail-handling equipment and in or near areas where certain mail pieces that likely contained anthrax were handled. Several people that were in such areas have contracted anthrax disease. These attacks pose a danger of infection that may be lethal to those in affected areas. Additionally, there is no readily available warning system to provide an early warning that a mail piece contains anthrax spores. Certain members of the general population may fear receiving and handling mail due to the threat of mail terrorism.

Anthrax is a biological agent that has apparently been placed in the U.S. postal delivery system in mail pieces that could be considered camouflaged as ordinary mail because they were not properly marked or properly contained, as a dangerous biological agent should be. The person placing such mail in the mail system had the apparent sole purpose of delivering the Anthrax as a biological weapon to kill the immediate victims and terrorize others who use the postal system. The Anthrax has apparently been transported in spore form and in such a small form as to enable it to float in the air. The disease known as Anthrax disease is caused by the bacterium Bacillus anthracis that is known as Anthrax. Anthrax is rod-shaped, and relatively large for a bacterium at 1 to 10 µm in length.

The disease may be manifested as pulmomary anthrax or inhalation anthrax when a sufficient amount of Anthrax is inhaled. The disease may be manifested as intestinal anthrax when ingested in too great a quantity. The disease may be manifested as cutaneous anthrax that is typically found when an open wound or sore of a person has been exposed to Anthrax.

There are dozens of biological and chemical substances that are potential hazards if placed in the mail stream. Additionally, explosive devices have been sent in the mails in order to harm recipients.

### SUMMARY

According to a first aspect of the present invention, there is provided a system of incoming mail receptacles for detecting hazards in a mail piece, comprising: a plurality of incoming mail receptacles each including a hazard detector, a communications system, and a source detection system for providing suspect source information when a hazard is detected; a server connected to the plurality of incoming mail receptacles for receiving suspect source information and communicating the suspect source information to the incoming mail receptacles.

According to a second aspect of the present invention, there is provided a method for coordinated hazard detection in a mail system having a plurality of incoming mail receptacles with hazard detector systems connected to a central server comprising: detecting the presence of a mail piece; detecting the source of a mail piece; testing the mail piece for hazards; alerting the central server upon detection of a hazard and providing source information to the central server.

### BRIEF DESCRIPTION OF THE DRAWINGS

For a better understanding of the invention and to show how the same may be carried into effect, reference will now be made, by way of example, to the accompanying drawings, in which:
FIG. 1 is a flow chart showing a prior art postal delivery process;
FIG. 2 is a flow chart showing a prior art postal delivery process;
FIG. 3A is a top view of a mail piece;
FIG. 3B is a top view of a mail piece;
FIG. 4 is a perspective cutaway view of an incoming mail receptacle according to an embodiment of the present application;
FIG. 5A is a top view of an incoming mail air sampler according to an embodiment of the present application in a first position;
FIG. 5B is a top view of an incoming mail air sampler according to an embodiment of the present application in a second position;
FIG. 5C is a top view of an incoming mail air sampler according to an embodiment of the present application in a third position;
FIG. 5D is a top view of an incoming mail air sampler according to an embodiment of the present application in a fourth position;
FIG. 6 is a perspective side view of an incoming mail air sampler according to an embodiment of the present application;
FIG. 7 is a top view of a flattener according to an embodiment of the present application;
FIG. 8 is a flowchart showing a process for detecting contaminated mail according to an embodiment of the present application;
FIG. 9 is a block diagram of a networked incoming mail receptacle system according to an embodiment of the present application;
FIG. 10 is a flowchart showing a process for sharing user notification of a quarantine condition according to an embodiment of the present application; and
FIG. 11 is a flowchart showing a process for sharing source exclusion information between incoming mail receptacles according to an embodiment of the present application.

### DETAILED DESCRIPTION OF EMBODIMENTS

Anthrax has been introduced into the mail system as a biological weapon. Similarly, other hazardous biological or chemical materials might be similarly transported in a mail system. Such criminal and terrorist activity provides a threat of cross contamination if entered into the mail-processing stream.

The present application describes embodiments of a system and method for detecting contaminated mail at the point of entry to keep it from entering the mail stream. The United States Postal Service (USPS) is referred to describe illustrative examples of a mail streams. The embodiments are illustrative and where alternative elements are described, they are understood to fully describe alternative embodiments without repeating common elements of other appropriate embodiments.

In one embodiment, a plurality of incoming mail receptacle devices include a biological contamination detection system to determine if mail inserted into the receptacle is contaminated. An air sample is collected from an incoming mail piece and then processed though a hazard detector to determine if the mail piece is contaminated. A mail piece source indication is detected from each mail piece. In the event of a hazard detection indication at one incoming mail receptacle, notification information for all quarantined mail pieces in the mail receptacle is transferred to a server that sends notification information to the users.

In one embodiment, a plurality of incoming mail receptacle devices include a biological contamination detection system to determine if mail inserted into the receptacle is contaminated. An air sample is collected from an incoming mail piece and then processed though a hazard detector to determine if the mail piece is contaminated. A mail piece source indication is detected from each mail piece. In the event of a hazard detection indication at one incoming mail receptacle, identifying information is transferred to a server that sends source blocking information to the other incoming mail receptacles.

There are many incoming mail receptacle in use. For example, in the United States, the USPS makes available many incoming mailboxes situated on public streets. Additionally, some public mailboxes are designed to be accessible to a driver such that the driver does not have to leave the car to place mail into the mailbox. Furthermore, USPS Post Offices utilize mail slots to receive incoming mail. Similarly, apartment buildings often have a group outgoing mail receptacle. Mail carriers also pick up mail from residential mailboxes. There are also several types of office mail delivery outgoing mailboxes in use. A department typically has a mail stop area with a drop off area for mail to be delivered to a post office.

Anthrax bacteria, bacillus anthracis, has been described as a very large, Gram-positive, spore-forming rod of 1-1.2 micron in width and 3-5 micron in length that form oval spores located centrally in a non-swollen sporangium. Typical paper has pores that average 10 microns in diameter, while the width of a typical human hair is around 90 microns. Letter envelopes are often not hermetically sealed and may be porous such that anthrax may pass through the envelope. Accordingly, anthrax and other biological and chemical hazards may escape from envelopes to contaminate mail-processing equipment that may cross contaminate other letters. Therefore, a sealed letter may not confine any enclosed anthrax to that particular letter and anthrax or other hazards may adhere to mail pieces. Some people advocate scrutinizing mail with excess postage or handwritten addresses. However, the relative anonymity of required markings on a letter present an inherent difficulty in identifying suspect letters to be scrutinized on the basis of the identity of the sender, receiver, type of markings used or postage.

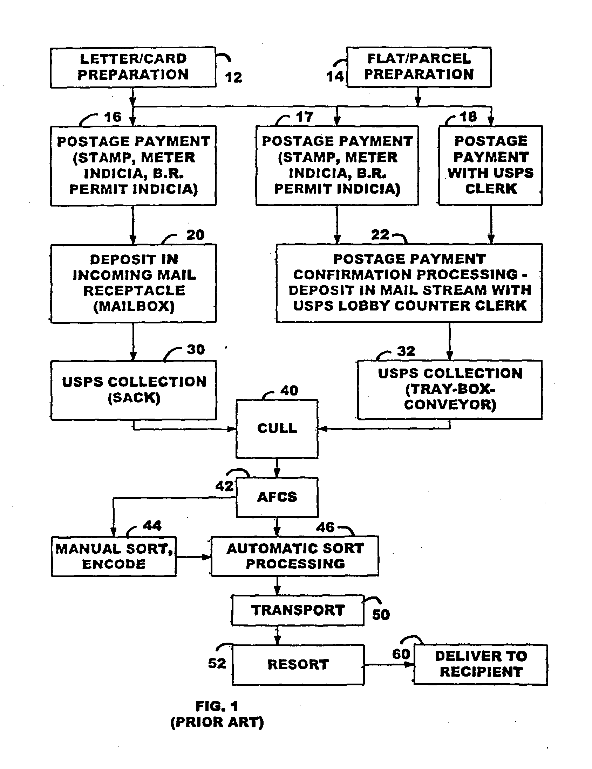

Referring to FIG. 1, a prior art mail process is shown. In step 12, a mail system user will prepare a mail piece such as a letter or a card. The user may place postage on the mail piece using a stamp, meter indicia or permit indicia in step 16. The user then places the mail piece in an incoming mail receptacle such as an incoming USPS mailbox in step 20. A user may also place postage on the mail piece in step 17 and then bring the mail piece to a USPS clerk in step 22. A postal worker will collect mail pieces from the mailbox in a sack in step 30 and bring them to a USPS facility for an initial cull in step 40. The mail pieces will then go through an AFCS process in step 42 to scan, OCR and code the mail pieces. If the mail piece could not be processed by the AFCS, a manual sort and encode is performed in step 44. Thereafter in step 46 the AFCS and manual streams merge for automatic sort processing in step 46. Thereafter the sorted mail is transported in step 50 to a USPS facility where it is resorted for a letter carried in step 52 and delivered to the recipient in step 60. The user may prepare a flat or parcel in step 14. The user may place postage on the mail piece in steps 16 or 17, but may pay for postage applied by a clerk in step 18. The flat or parcel may be placed in a mailbox in step 20 as described above, or may be brought to a USPS clerk in step 22 for processing into a incoming tray in step 32. The mail piece is then placed in the initial cull in step 40 and processed as above.

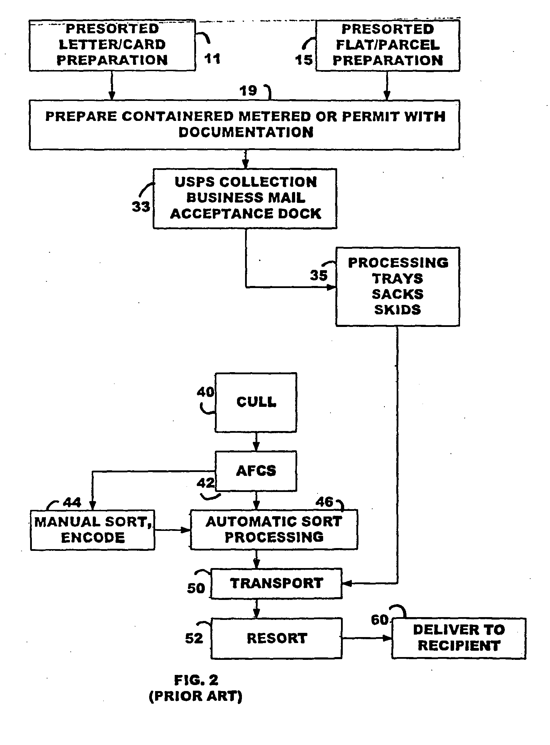

Referring to FIG. 2, a prior art mail process for presorted bulk mail is shown. In step 11, a mail system user prepares presorted mail pieces such as letter and cards. The user may prepare presorted flats or parcels in step 15. The mail pieces are prepared with permit indicia or metered indicia with the required presort discount documentation in step 19. The mail pieces are brought to the USPS business mail acceptance dock with the required documentation in step 33 to be placed in processing trays, sacks and skids in step 35. As shown in FIG. 2, the mail is placed directly in transport in step 50 for later resort and delivery.

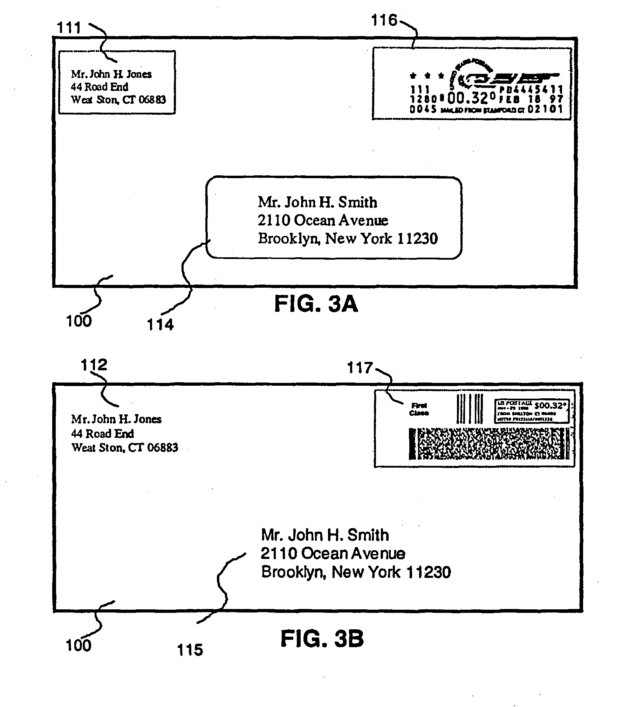

Referring to FIG. 3A, an envelope is shown. Envelope 100 is marked with a label 111 for a return address and a label 114 for a destination address. A postage indicia 116 is also shown. Referring to FIG. 3B. an envelope is shown. Envelope 100 is directly marked with return address 112 and destination address 115 with postage indicia 117. The envelope is a number 10 paper envelope. The flap (not shown) has a strip of glue that covers much of the perimeter of the inside flap.

The present application describes embodiments that process envelopes that are not hermetically sealed. The examination and study of many envelopes suggests that even very well sealed envelopes have four corners that are not hermetically sealed. The openings typically vary between 3 and 10 mm. Squeezing the edges of a flat envelope will deform the flat envelope into a pillow shape with air in the pillowed area. The envelope thus shaped is somewhat like a bellows such that maintaining the force on the edges while squeezing the pillowed are will force air out of the openings. If the pillow is flattened from one direction, a majority of the escaping air will come from one side of the envelope.

The force applied to the pillowed area and the edges can be monitored along with any feedback to prevent crushing the envelope.

As can be appreciated, various forms of mail include many forms of correspondence including bills, advertisements, government correspondence, periodicals and parcels.

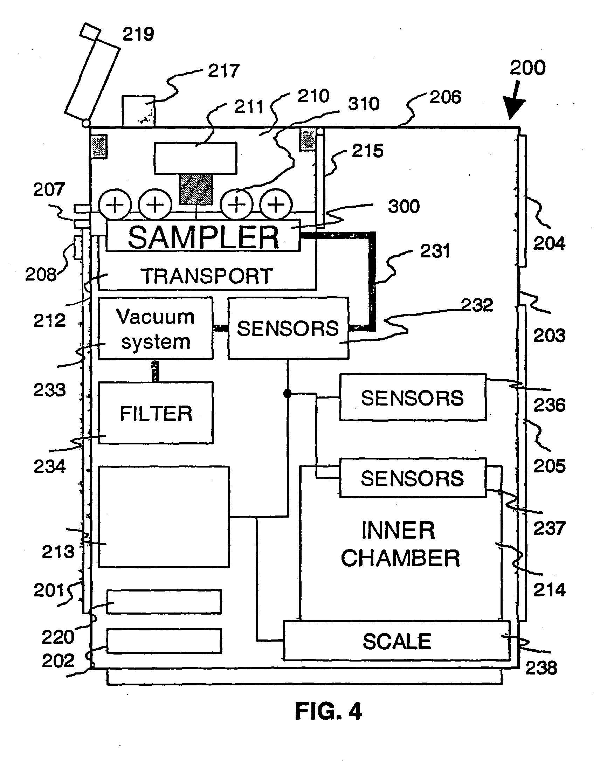

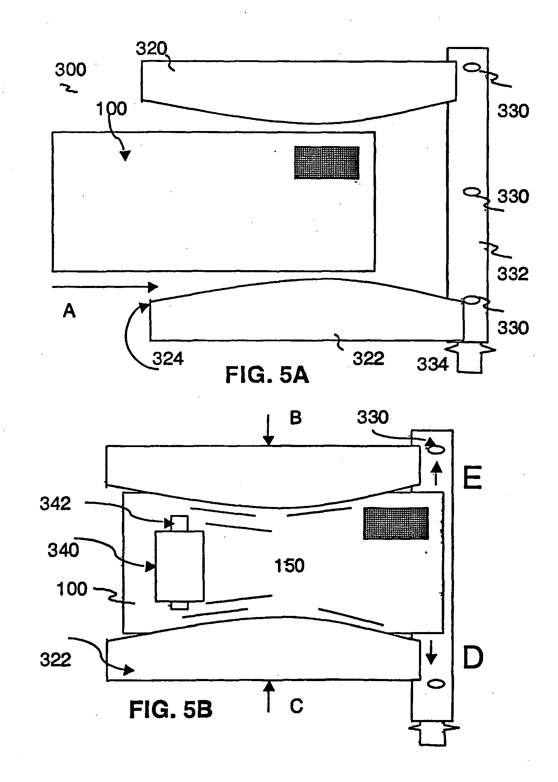

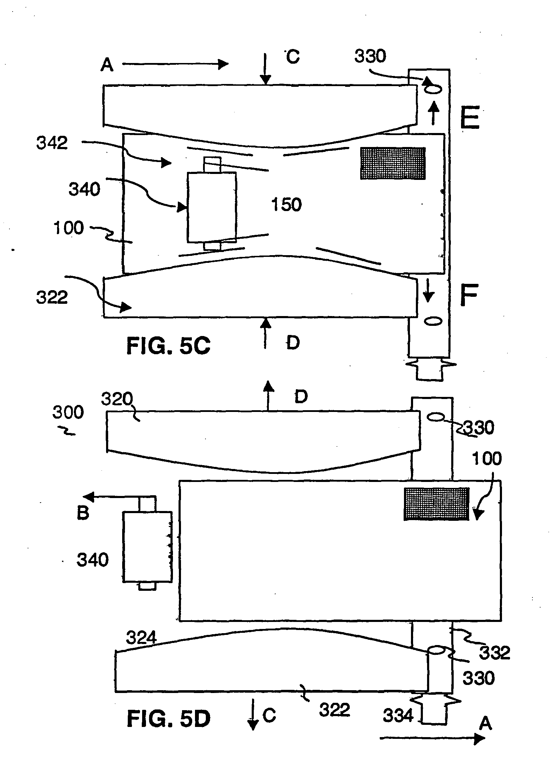

Referring to FIG. 4, an incoming mail receptacle with hazard detector is described. Incoming mailbox 200 has a front panel 201 containing a slot 208 for receptacle identification cards and a mail slot 207 for depositing mail, a top panel 206, side panels (not shown) and a back panel 203 having a door 204 for access to life-harming materials, and a door 205 for access to non-life-harming materials. Receptacle 200 has a sampling chamber 210 that contains an image scanner 211 and a transport mechanism 212. When mail piece 100 (Fig. 5) is deposited face up in slot 207, mail piece 100 will enter sampler chamber 210. The face of mail piece 100 will be scanned and read by scanner 211 while being moved by transport 212. Receptacle controller 213 controls the hazard detection process and the hazard notification process. Controller 213 is powered by power source 202 and is connected to communications device 220. Communications device 220 includes a cellular data modem. Alternatively any wired or wireless communications device may be utilized. The control and power connections for such a system are well known and not described in detail. Power is preferably supplied by a battery and solar power array.

An external door 219 with handle is provided to allow access to mail opening 207. A second door (not shown) capable of creating an interior hermetic seal connected to the controller and provided to lock the mailbox in case a hazard is detected. An internal door 215 hermetically seals chamber 210 during the test and then after a successful test, it opens to allow the mail piece to enter the inner chamber 214. Scale 238 detects the presence and optionally the weight of the mail pieces in the inner chamber. Alternatively an optical sensor may be utilized.

The sampler described below will provide an air sample from a mail piece through vacuum tube 231 to sensors 232 using vacuum system 233 and filter 234 to vent the vacuum outside the mailbox. As described below, sensors 232 provide a near real time test that is performed before the mail piece is accepted and before the mailbox is cleared to receive another mail piece at the input 207. Additional sensors 236, 237 provide additional test having relatively longer test times. In an alternative embodiment, the mailbox stops accepting mail pieces at a predetermined time before a scheduled pick up so that the slower sensors 236, 237 can provide an adequate test. For example, if there is a scheduled pick up at 8 o'clock in the evening, the mailbox will stop accepting mail 30 minutes before to allow a PCR based DNA test of collected samples.

The mailbox is preferably hermetically sealed to contain any detected hazards and completely opaque to visible light and other near spectrums including Ultra Violet (UV) in order to prevent disruption of the sensor.

Sensors 232 include fast response sensors. Sensors 232 include an Endospore Detection System available from Ocean Optics of Dunedin, Florida. In an alternative, sensors 232 may include a laser-acoustic sensor available from the Office of Naval Research. Similarly, sensors 232 may include an ultraviolet fluorescence bacteria detector from Sandia National Laboratories described in Proc. SPIE Vol. 2366, p. 147-153.

Controller 213 will shut down the mailbox and close upon a positive test. The controller 213 will then use communications device 220 to alert a response team.

In an alternative embodiment, Sensors 232 preferably include a mass spectrometer detector for detecting explosives, narcotics, chemical and biological agents as potential hazards. Sensors 232 include a UV radiation source and a fluorometer to detect fluorescent radiation in the air sample.

In an alternative embodiment, the sampled air is forced into distilled water for 45 seconds to extract any dipicolinic acid present, followed by chelation with terbium and tested for phosphorescence.

Sensors 236 include relatively slow test systems including a 30 minute test PCR based detection system such as that available from Cepheid. The sampled air is divided via sampling tubes into the reagent chambers of the test kit and processed. Alternatively, a DNA test system available from Lawrence Livermore Laboratory is utilized. Alternatively, a system from the Office of Naval Research utilizing lasers and acoustic sensors is utilized.

Alternatively, the sampled air is forced into water and tested with water test systems such as those available from Sandia National Laboratories of Albuquerque, New Mexico.

Sensors 237 include relatively slow test systems including a toxic agent sniff sensor available from Sandia National Laboratories of Albuquerque, New Mexico and used for testing for toxins in water supplies. In an alternative, an Immunoaffinity-based phosphorescent sensor is utilized as described in Proc. SPIE Vol. 3913, p.204-14. In another alternative, a system available from Egea Biosciences of San Diego, California is used. It was developed under a DARPA contract using a DNA-chip and non-repeating markers as identifiers of biological hazards. In another alternative, a system available from Cellomics, Inc. of Pittsburgh, Pennsylvania using living cell technology is utilized.

In an alternative embodiment, Sensors 232 include ion mobility spectrometer sensors available from Sandia National Laboratories of Albuquerque, New Mexico for detecting bombs.

The sampler system may be utilized in other devices that may be utilized at different stages of the mail flow process. Sensors 232, 236 and 237 are described as plural sensors, however, one sensor may be used for each. Furthermore, each sensor device described may be preferred for a sensor in device 232, 236 or 237, but may be used in any or all of the sensors 232, 236 and 237. An additional embodiment may use only one of sensors 232, 236, 237 or a combination of two or more of them.

Referring to FIGs. 5A-5D, the sample extractor 300 is described. Referring to FIG. 5A, a first position of the extractor includes a first envelope deforming block 320 and a second envelope deforming block 322 configured to receive a mail piece in a flat orientation that is not raised on edge. The blocks 320, 322 are shown in the open position. The mail piece is fed into the sample extractor using mail piece handling equipment such as a continuous belt driven by an electric motor. Alternatively rollers may be used. Equipment for moving mail pieces is well known and will not be described in detail. The mail piece, number 10 envelope 100 is fed into sample extractor 300 in direction A. Sample extractor 300 includes a vacuum collector 332 having openings 330 and vacuum tube 334.

Referring to FIG. 5B, a second position of the extractor is shown. When a sensor (not shown) determines that the envelope 100 is in place, block 320 is activated and forced in direction B and block 322 is forced in direction C such that edge 324 deforms envelope 100. The envelope 100 will form a pillowed area 150. Flattener 340 is a squeeze roller rubber wheel on shaft 342 that is lowered into position over envelope 100 at the edge closest the input of mailbox 200. The vacuum may begin at ports 330 as air may flow in directions E, F when at this position.

Referring to FIG. 5C, a third position of the extractor is shown. The flattener 340 is rolled forward in direction A to squeeze the air out of pillowed area 150 while the vacuum collection ports 330 collect air forced out at E, F.

In an alternative embodiment, the blocks 320, 322 are stopped and the squeeze roller 340 is started when a light sensor (not shown) indicates a sufficient amount of pillowing.

In a further alternative embodiment, the squeeze roller 340 is equipped with a feedback sensor to determine if a hermetically sealed envelope is present The force required to deflate the pillowed area 150 should decrease if the envelope 100 is not hermetically sealed. In such a case, the detected hermetically sealed envelope is segregated for further scrutiny.

In another alternative embodiment, a vacuum is applied to all or part of the bottom of the envelope to hold down the bottom side. Any air picked up by the vacuum is fed through the detector, as the envelope may be porous to a hazardous material.

Referring to FIG. 5D, a fourth position of the extractor is shown. The blocks 320, 322 are returned to the start position to release the pillowing tension on the envelope 100. The flattener 340 is rolled backward in direction B to re-flatten the envelope. The envelope is fed forward if the test passes and the flattener is then returned to a start position for the next envelope. In an alternative, the squeeze roller does not flatten the envelope o the return path B, but is lifted off the envelope.

In an alternative embodiment, only one envelope-deforming block is movable. In another alternative, the mail piece is fed on edge such that gravity will aid registration of the mail piece and collection of the sample.

In a further alternative embodiment, the width of the incoming mail piece is measured to set the position and distance between blocks 320,322 in a snug open position before moving them into a pillowing position. The width measurement is performed using a series of light sensors in a row at the opening 207 of the mailbox 200.

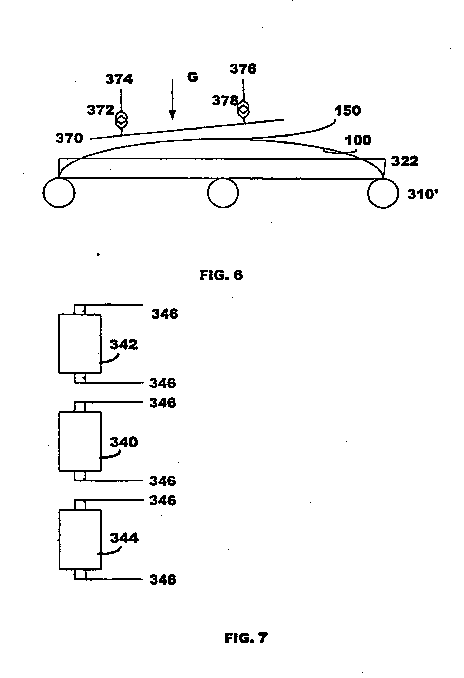

Referring to FIG. 6, an alternative flattener is shown. In this embodiment, flattening plate 370 is forced down in direction G by link 374 and force measurement device 372, followed by force on link 376 and force measurement device 378 to flatten pillowed area 150. In this embodiment, rollers 310' feed the envelope 100 forward into blocks 320, 322.

Referring to FIG. 7, an alternative flattener is shown to accommodate varying width mail pieces. Flattener 340 is independently connected with links 346 such that any one, all, or combination of rollers 340, 342, 244 may be lowed and rolled over a mail piece.

In another embodiment, a brush or scraper is used to sample a surface or both sides of a mail piece. A source of forced air such as a fan may be used to move the sample closer to the vacuum sampling holes.

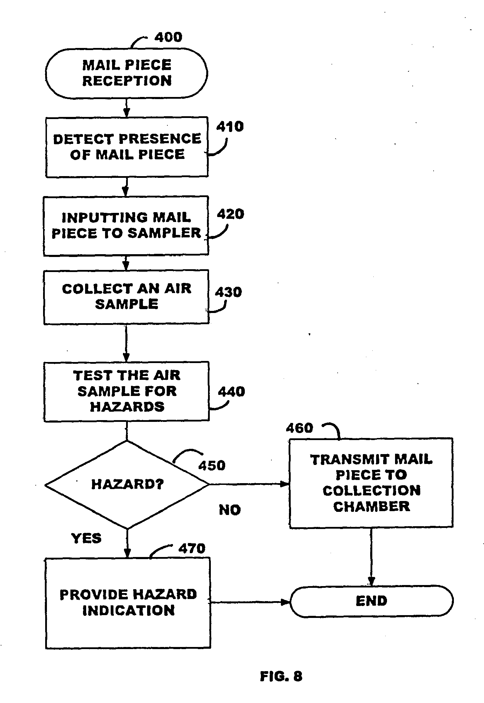

Referring to FIG. 8, a process for detecting hazardous mail is described. In step 410, the process detects the presence of a mail piece. In step 420, the process imports the mail piece into the segregated incoming mail sampler. In step 430, the process collects an air sample. In step 440, the process tests the air sample for hazards. In step 450, the process includes a decision step to decide is a hazard is present. If a hazard is present, the process provides a hazard indication in step 470 and then ends. If no hazard is present, the process transports the mail piece to the collection chamber in step 460 and then ends.

Position and presence sensors are well known and not described in detail. Similarly, force sensors and feedback loops are well known and not described in detail. Controllers and timers are well known and not described in detail. The processes described may be performed in hardware, firmware, in software on a general-purpose processor or combination thereof. The controller may be a Pentium III mobile processor with support circuits and devices, but may include another processor and may be re-configurable and may be networked via a wired or wireless communications channel.

In an alternative embodiment, USPS clerks may use the devices described above at a post office counter. In such a system, several units may be located in close proximity and may share common parts other than the actual envelope feeder. In one embodiment, a common controller may service four units that are networked. Similarly, a common vacuum source and a common power source may be shared.

In an alternative embodiment, a mailbox 200 includes an incoming chute that directs mail into a plastic bag that the postal worker can hermetically seal for transport to a safe mail handling facility to test for hazards. The mailbox identifier can be placed on the plastic bag. In another embodiment, the mailbox contains a store of plastic bags lining the receptacle and a heat applicator to hermetically seal the bags before a postal worker picks up the bag.

In an alternative embodiment, the incoming mail mailbox includes a parcel receptacle that contains a holding area that is hermetically sealed and segregated from the letter holding area. Current USPS requirements state that parcels weighing over one pound cannot be placed in incoming letter boxes. Another portion of the scale 238 may be utilized to ensure compliance.

In an alternative embodiment, the letter puffer or air sampler 300 includes a feedback system to determine if the letter is hermetically sealed. The puffer sensor tests the letter. If the feedback system determines that a letter is hermetically sealed, it is passed through an UV-C ultraviolet surface - decontamination system and segregated in a hermetically sealed envelope bin.

In an alternative embodiment, the air sampler includes a segmented skewer that is utilized to penetrate the mail piece. One opening forces air into the envelope at a first location and a second opening introduces a vacuum to remove a sample of air from the envelope. In a further alternative, two hollow tubes are inserted in the envelope openings to force in air and remove a sample, respectively.

In an alternative embodiment, the scanner is placed in front of the envelope feed path to scan the top of the envelope. The scanner is used to determine if the envelope is inserted face up and includes postage. If the envelope is upside down, it is ejected. If the envelope is inserted in the correct orientation, it is scanned and fed to the detector stage.

In an alternative embodiment, the scanner is used to scan the entire face of the document.

In the embodiments described below, information is shared among networked incoming mail receptacles, preferably using a central server. Additionally, if a postal authority maintains control of data from an incoming mail receptacle and other entities have relevant information, a secure link provides information interchange. As can be appreciated, more than one postal meter manufacturer may provide meter data to a meter provider or third party for use in the system.

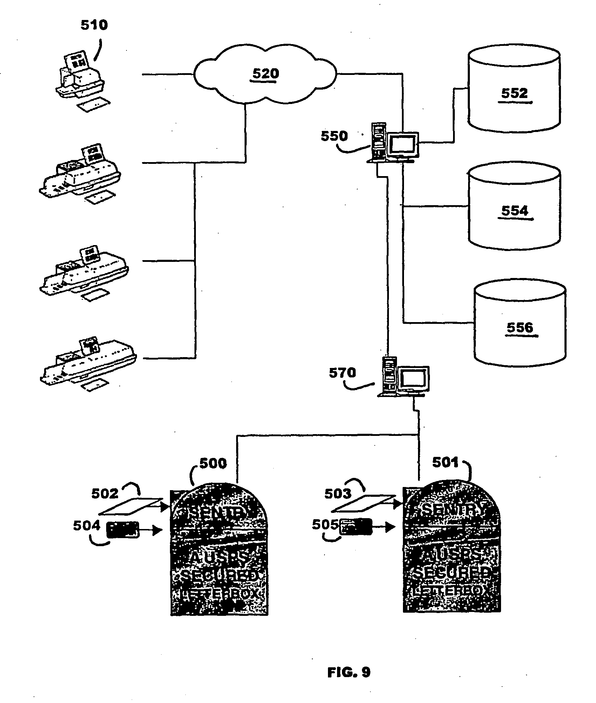

Referring to FIG. 9, a networked incoming mail receptacle system is described. Postage meters 510 are uniquely identified and located in known locations. At least some of meters 510 are connected to network 520 that is connected to trusted server 550. The network 520 is preferably a secure Internet connection such as a Virtual Private Network (VPN), but could be a dial up connection, wireless connection or other wired connection. Server 550 is connected to a meter database 552 that stores meter data including service information and historical data. Database 554 includes source exclusion information. For example, database 554 includes data relating to the locations that should accept mail from a particular meter. Additionally, the database contains other source exclusion data such as counterfeit source designations, scans and handwriting analysis of known hazards, return address or destination address associated with known hazards and indicators of compromised meter numbers. Such a system provides advantageous flexibility. If a credible threat against United States Senators exists, all mail to such people and their offices will be listed as suspect and quarantined at the incoming mailboxes for further scrutiny.

Server 570 is connected to each incoming mail receptacle, 500, 501 preferably using a secure Internet connection, but LAN, WAN, wireless and wired connections can be utilized. Mail pieces 502 and 503 are tested, while users may be prompted for an identification card for source verification.

Database 556 includes notification information. In this embodiment, the incoming mail receptacle scans each incoming mail piece and stores the information. In one embodiment, each mailbox 500 stores a scan of each mail piece.

If a contamination hazard indication is received, the entire mailbox is physically quarantined. The mailbox 500 then uploads the current mail information to the server 550. The server determines source and destination information. For example, the server is programmed to perform an OCR of the scanned image of each envelope in the tainted mailbox. The server will then utilize database 556 to attempt to locate a known valid email address for the sender and the recipient. If a known address is found, a notification email describing the facts of the quarantined mail including the mailbox location is sent. Optionally, the sender of the actual tainted mail is not notified. If an email address is not found, the system attempts to locate a known valid telephone number. Outside databases such as telephone directories are queried. If neither a telephone number nor an email address are available, the system prepares a postal mail notification on a post card.

In an alternative embodiment, the mailbox detects a meter number for source notification information.

Referring to FIG. 9, a networked incoming mail receptacle system is described without database 556. Postage meters 510 are uniquely identified and located in known locations. At least some of meters 510 are connected to network 520 that is connected to trusted server 550. The network 520 is preferably a secure Internet connection such as a VPN, but could be a dial up connection, wireless connection or other wired connection. Server 550 is connected to a meter database 552 that stores meter data including service information and historical data. Database 554 includes source exclusion information. For example, database 554 includes data relating to the locations that should accept mail from a particular meter. Additionally, the database contains other source exclusion data such as counterfeit source designations, scans and handwriting analysis of known hazards, return address or destination address associated with known hazards and indicators of compromised meter numbers. Such a system provides advantageous flexibility. If a credible threat against United States Senators exists, all mail to such people and their offices will be listed as suspect and quarantined at the incoming mailboxes for further scrutiny.

Server 570 is connected to each incoming mail receptacle, 500, 501 preferably using a secure Internet connection, but LAN, WAN, wireless and wired connections can be utilized. Mail pieces 502 and 503 are tested, while users may be prompted for an identification card for source verification.

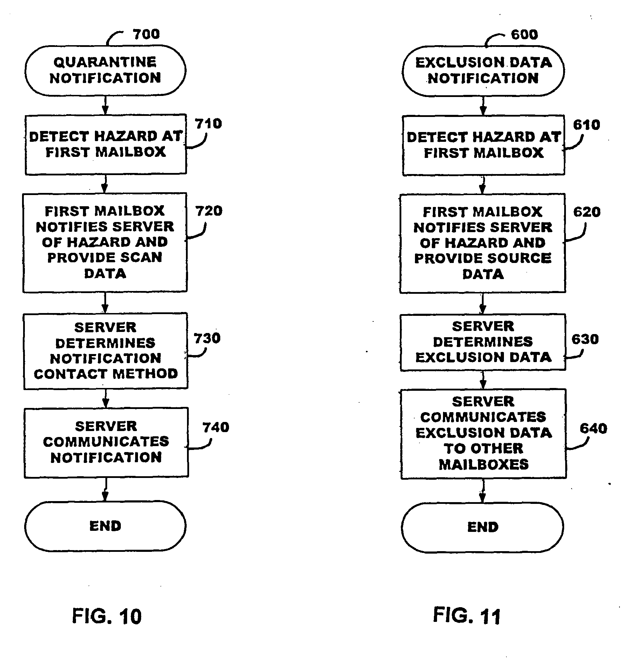

Referring to FIG. 10, a process for notifying quarantined mail users is described. In a system of a plurality of incoming mail receptacles a first mailbox receives a hazard indication in step 710. In step 720, the first mailbox send notification to the server. The server processes the hazard notification in step 730 to determine notification data in an order of priority of email contact, telephone contact and postal mail contact. In step 740, the server sends the notification by the first available method.

Referring to FIG.11, a process for sharing source exclusion data is described. In a system of a plurality of incoming mail receptacles a first mailbox receives a hazard indication in step 610. In step 620, the first mailbox send notification to the server. The server processes the hazard notification in step 630 to determine exclusion data. In step 640, the server sends the exclusion data to the network of incoming mailboxes.

As can be appreciated, hazard notifications may be entered into the server without being received from an incoming mail receptacle.

A mail piece source indication is detected from each mail piece. In the event of a hazard detection indication at one incoming mail receptacle, identifying information is transferred to a server that sends source blocking information to the other incoming mail receptacles.

The meters are preferably DM300 digital postage meter available from Pitney Bowes Inc. of Stamford, CT, but other meters including other digital postage meters available from Pitney Bowes Inc. may be used.

In an alternative embodiment the system attempts to capture fingerprints. If the system detects a potential hazard, it locks the mailbox, provides the required hazard indications and attempts to record fingerprints from the envelope using the scanner. A fingerprint enhancing substance such as crazy glue fumes are applied. Thereafter, the envelope is scanned using scanner 232 to detect and store any fingerprints on the envelope.

In an alternative embodiment, each mail piece is imprinted with a static ID unique to that mailbox and a timestamp. The data is then logged in a central database 554 and tracked from insertion in the mail stream to delivery.

In an alternative embodiment, each incoming mail receptacle in the system can receive source exclusion data, but not all have detectors.

In an alternative embodiment, each meter Identification code for every meter in the acceptable geographic area for the mailbox is stored in the mailbox. The mailbox scans the meter Identification and flags a hazard if the meter number does not correspond to that area.

The systems described above require electrical power. Power supplies are well known and not described in detail. A utility connection, a battery, solar power or other source of electricity may power the system.

The above specification describes system and methods for detecting hazards in mail. As can be appreciated, various combinations of the above detection systems may be utilized.

The described embodiments are illustrative and the above description may indicate to those skilled in the art additional ways in which the principles of this invention may be used without departing from the scope of the invention. Accordingly the scope of the claims should not be limited by the particular embodiments described.

## Claims

1. A system of incoming mail receptacles for detecting hazards in a mail piece (100), comprising:
a plurality of incoming mail receptacles each including a hazard detector (232, 236, 237), a communications system (220), and a source detection system (211) for providing suspect source information when a hazard is detected;
a server (550, 570) connected to the plurality of incoming mail receptacles for receiving suspect source information and communicating the suspect source information to the incoming mail receptacles.

2. The system of claim 1 further comprising:
a secure network connection between each incoming mail receptacle and the server (550, 570).

3. The system of claim 1 or claim 2 further comprising:
an image scanner (211) for scanning the face of a mail piece (100).

4. The system of any preceding claim, configured and arranged to notify users including senders and recipients having quarantined mail,
wherein: the hazard detector (232, 236, 237) is arranged to trigger a mail piece quarantine indication, the source detection system (211) is arranged to provide recipient information for quarantined mail pieces (100); and
the server (550, 570) is configured to determine a notification method and communicate the notification to at least one of the sender and the recipient.

5. A method for coordinated hazard detection in a mail system having a plurality of incoming mail receptacles with hazard detector systems connected to a central server (550, 570) comprising:
detecting the presence of a mail piece (100);
detecting the source of a mail piece (100);
testing the mail piece (100) for hazards;
alerting the central server upon detection of a hazard and providing source information to the central server.

6. The method of claim 5 wherein the source detection includes detecting a meter serial number.

7. The method of claim 5 or claim 6 wherein the source detection includes detecting a return address.

8. The method of any one of claims 5 to 7 wherein the source detection includes detecting a handwriting sample.

9. The method of any one of claims 5 to 8, further comprising:
detecting sender and recipient information from a mail piece;
determining a notification method;
notifying at least one user of the mail piece quarantine.

10. The method of any one of claims 5 to 9 wherein the source detection includes detecting a destination address.

11. The method of any one of claims 5 to 10 wherein the determination of a notification method comprises determining if a valid email address is available for the user.

12. The method of any one of claims 5 to 11 wherein the determination of a notification method comprises determining if a valid telephone number is available for the user.

13. The method of any one of claims 5 to 12 wherein the determination of a notification method comprises determining if the envelope address is a valid postal address for the user.

## Patentansprüche

1. System von Aufnehmern für eingehende Post zur Erkennung von Risiken in einem Poststück (100), umfassend:
eine Vielzahl von Aufnehmern für eingehende Post, wobei jeder einen Risiko-Erkenner (232, 236, 237), ein Kommunikationssystem (220), und ein Quellen-Erkennungssystem (211) zum Bereitstellen von Informationen über verdächtige Quellen, wenn ein Risiko erkannt wird, beinhaltet;
einen Server (550, 570), der mit der Vielzahl von Aufnehmern für eingehende Post verbunden ist, zum Empfangen von Informationen über verdächtige Quellen und zum Kommunizieren der Informationen über verdächtige Quellen an die Aufnehmer für eingehende Post.

2. System nach Anspruch 1, ferner umfassend:
eine sichere Netzwerkverbindung zwischen jedem Aufnehmer für eingehende Post und dem Server (550, 570).

3. System nach Anspruch 1 oder 2, ferner umfassend:
einen Bild-Scanner (211) zum Scannen des Äußeren eines Poststücks (100).

4. System nach einem der vorangegangenen Ansprüche, konfiguriert und angeordnet, um Benutzer, beinhaltend Sender und Empfänger, die unter Quarantäne gestellte Post haben, zu verständigen,
wobei: der Risiko-Erkenner (232, 236, 237) angeordnet ist, um eine Poststück-Quarantänen-Anzeige auszulösen, das Quellen-Erkennungssystem (211) angeordnet ist, um Empfängerinformation für unter Quarantäne gestellte Poststücke (100) bereitzustellen; und
der Server (550, 570) konfiguriert ist, um ein Benachrichtigungsverfahren zu bestimmen und die Benachrichtigung zu mindestens einem von dem Sender und dem Empfänger zu kommunizieren.

5. Verfahren zur koordinierten Risiko-Erkennung in einem Post-System mit einer Vielzahl von Aufnehmern für eingehende Post mit Risiko-Erkennungssystemen, die mit einem zentralen Server (550, 570) verbunden sind, umfassend:
Erkennen der Anwesenheit eines Poststücks (100);
Erkennen der Quelle eines Poststücks (100);
Testen des Poststücks (100) auf Risiken;
Alarmieren des zentralen Servers, wenn ein Risiko erkannt wird, und Bereitstellen von Quelleninformation an den zentralen Server.

6. Verfahren nach Anspruch 5, wobei die Quellenerkennung ein Erkennen einer Maschinen-Seriennummer beinhaltet.

7. Verfahren nach Anspruch 5 oder 6, wobei die Quellenerkennung ein Erkennen einer Rückgabeadresse beinhaltet.

8. Verfahren nach einem der Ansprüche 5 bis 7, wobei die Quellenerkennung ein Erkennen einer Handschriftprobe beinhaltet.

9. Verfahren nach einem der Ansprüche 5 bis 8, ferner umfassend:
Erkennen von Sender- und Empfängerinformationen von einem Poststück;
Bestimmen eines Benachrichtigungsverfahrens;
Benachrichtigen mindestens eines Benutzers über die Poststück-Quarantäne.

10. Verfahren nach einem der Ansprüche 5 bis 9, wobei die Quellenerkennung ein Erkennen einer Zieladresse beinhaltet.

11. Verfahren nach einem der Ansprüche 5 bis 10, wobei die Bestimmung eines Benachrichtigungsverfahrens ein Bestimmen, ob eine gültige Email-Adresse für den Benutzer verfügbar ist, umfasst.

12. Verfahren nach einem der Ansprüche 5 bis 11, wobei die Bestimmung des Benachrichtigungsverfahrens ein Bestimmen, ob eine gültige Telefonnummer für den Benutzer verfügbar ist, umfasst.

13. Verfahren nach einem der Ansprüche 5 bis 12, wobei die Bestimmung des Benachrichtigungsverfahrens Bestimmen, ob die Umschlagadresse eine gültige Postadresse für den Benutzer ist, umfasst.

## Revendications

1. Système de boîtes de réception de courrier, destiné à détecter les risques d'un objet postal (100), comprenant:
une pluralité de boîtes de réception de courrier, chacune comprenant un détecteur de risque (232, 236, 237), un système de communication (220) et un système de détection de source (211) destiné à fournir des informations de source suspecte lorsqu'un risque est détecté ;
un serveur (550, 570) connecté à la pluralité de boîtes de réception de courrier afin de recevoir les informations de source suspecte et de communiquer les informations de source suspecte aux boîtes de réception de courrier.

2. Système selon la revendication 1, comprenant en outre :
une connexion réseau sécurisée entre chaque boîte de réception de courrier et le serveur (550, 570).

3. Système selon la revendication 1 ou la revendication 2, comprenant en outre :
un scanneur à images (211) destiné à numériser le recto d'un objet postal (100).

4. Système selon l'une quelconque des revendications précédentes, configuré et conçu pour notifier des utilisateurs, y compris des expéditeurs et des destinataires, ayant du courrier en quarantaine,
dans lequel le détecteur de risque (232, 236, 237) est conçu pour déclencher une indication de mise en quarantaine d'un objet postal, le système de détection de source (211) est conçu pour fournir des informations de destinataire pour des objets postaux (100) en quarantaine ; et
le serveur (550, 570) est configuré pour déterminer un procédé de notification et pour communiquer la notification à au moins l'expéditeur ou le destinataire.

5. Procédé de détection coordonnée des risques dans un système de courrier ayant une pluralité de boîtes de réception de courrier, avec des systèmes de détection de risque connectés à un serveur central (550, 570), comprenant les étapes consistant à :
détecter la présence d'un objet postal (100) ;
détecter la source d'un objet postal (100) ;
tester les risques de l'objet postal (100) ;
alerter le serveur central en cas de détection d'un risque et fournir des informations de source au serveur central.

6. Procédé selon la revendication 5, dans lequel la détection de la source comprend la détection d'un numéro de série de machine d'affranchissement.

7. Procédé selon la revendication 5 ou la revendication 6, dans lequel la détection de la source comprend la détection d'une adresse de retour.

8. Procédé selon l'une quelconque des revendications 5 à 7, dans lequel la détection de la source comprend la détection d'un échantillon d'écriture manuscrite.

9. Procédé selon l'une quelconque des revendications 5 à 8, comprenant en outre les étapes consistant à :
détecter des informations d'expéditeur et de destinataire à partir d'un objet postal;
déterminer un procédé de notification ;
notifier au moins un utilisateur de la mise en quarantaine de l'objet postal.

10. Procédé selon l'une quelconque des revendications 5 à 9, dans lequel la détection de la source comprend la détection d'une adresse de destination.

11. Procédé selon l'une quelconque des revendications 5 à 10, dans lequel la détermination d'un procédé de notification comprend l'étape consistant à déterminer si une adresse de courriel valide est disponible pour l'utilisateur.

12. Procédé selon l'une quelconque des revendications 5 à 11, dans lequel la détermination d'un procédé de notification comprend l'étape consistant à déterminer si un numéro de téléphone valide est disponible pour l'utilisateur.

13. Procédé selon l'une quelconque des revendications 5 à 12, dans lequel la détermination d'un procédé de notification comprend l'étape consistant à déterminer si l'adresse de l'enveloppe est une adresse postale valide pour l'utilisateur.
